# EUROPÄISCHE PATENTSCHRIFT

(11) **EP 0 834 688 B1**
(45) Veröffentlichungstag und Bekanntmachung des Hinweises auf die Patenterteilung: **22.10.2003**
(21) Anmeldenummer: 97116532.9
(22) Anmeldetag: 23.09.1997
(51) Int. Cl.: F16J 15/32

(54) **Bürstendichtung**
Brushseal
Joint à brosses

(30) Priorität: 02.10.1996 DE 19640689; 17.10.1996 DE 19642781
(43) Veröffentlichungstag der Anmeldung: 08.04.1998
(73) Patentinhaber: MTU Aero Engines GmbH, 80995 München (DE)
(72) Erfinder: Gail, Alfons, 86316 Friedberg (DE); Werner, Klemens, 80999 München (DE)
(74) Vertreter: Einsele, Rolf W.

(56) Entgegenhaltungen:
- DE-A- 3 720 069
- DE-A- 3 907 614
- US-A- 1 419 927
- US-A- 5 464 275

## Beschreibung

Die Erfindung betrifft eine Bürstendichtung zur Abdichtung eines Spaltes zwischen einem Rotor, und einem Stator gemäß Oberbegriff des Anspruchs 1. Eine solche Bürstendichtung ist in der DE 37 20 069 A1 offenbart.

Bürstendichtungen der eingangs genannten Art kommen bei Turbomaschinen, insbesondere Gasturbinentriebwerken zum Einsatz, um fluidisch unterschiedlich druckbeaufschlagte Räume an Umfangsspalten, z.B. zwischen einem Maschinengehäuse und dem Rotor oder einer Maschinenwelle mit möglichst geringer Leckage abzudichten. Dabei sollen z.B. aus Rotorunwuchten resultierende, exzentrische Rotor- oder Wellenpositionen gegenüber dem Gehäuse durch eine elastische und bewegliche Borstennachführung ausgeglichen werden können. Hierin heben sich Bürstendichtungen gegenüber den bislang verwendeten Labyrinthdichtungen vorteilhaft ab, da diese sich nur in sehr eingeschränktem Maße an Wellenbewegungen anpassen können. Desweiteren unterscheiden sich Bürstendichtungen von den Labyrinthdichtungen durch niedrigere Herstellkosten und geringeres Gewicht.

Wesentlich für eine lange Lebensdauer der Bürstendichtung ist eine feste und langlebige Einfassung der Borsten in Dichtungsgehäuse, so daß diese während des Betriebes nicht verloren gehen können und somit die Dichtwirkung nicht vermindert oder gar das Betriebsverhalten des Rotors beeinträchtigt wird. In der DE 39 07 614 A1 umschlingen die Borsten einen Kernring, wobei die Borsten mit dem Kernring wiederum von einem Klemmring umfaßt werden, der in Umfangsrichtung geschlitzt ist, so daß die Borsten mit ihren freien Enden nach radial innen, zum Rotor ausgerichtet, aus dem Klemmring heraustreten können. Der so gefaßte Bürstenring ist zwischen zwei Haltescheiben eingelegt, die das Bürstengehäuse bilden und die Klemmkraft auf den Klemmring übertragen.

Hiervon ausgehend ist es Aufgabe der Erfindung, eine gattungsgemäße Bürstendichtung anzugeben, die gegenüber dem Stand der Technik eine vereinfachte Fassung der Borsten im Bürstengehäuse bei gleichbleibend zuverlässiger Festlegung der Borsten ermöglicht.

Erfindungsgemäß wird die Aufgabe durch die Merkmale des kennzeichnenden Teils des Anspruchs 1 gelöst.

Die erfindungsgemäße Bürstendichtung hat den Vorteil, daß durch die klemmende Festlegung der Borstenenden in einem axial oder radial ausgerichteten Abschnitt der beiden Haltescheiben die Borsten eine Umlenkung erfahren, die eine erhöhte Reibung der Borsten untereinander und gegenüber dem Borstengehäuse bewirkt und neben dieser reibschlüssige Festlegung zusätzlich eine gewisse formschlüssige Festlegung der Borsten im Gehäuse erzielt wird, so daß ohne zusätzliche Klemmittel wir beispielsweise Klemmring oder Kernring eine zuverlässige Festlegung der Borsten im Gehäuse gewährleistet werden kann.

Aus der geringen Anzahl an Bauteilen resultiert eine erhebliche Fertigungsvereinfachung zumal die Haltescheiben aufgrund ihrer mäßigen Ausformung in axialer Richtung durch Biegeumformen, Pressen oder Ziehen einfach herstellbar sind. Dies gilt insbesondere in der Ausführung bei welcher die Klemmung in einem radial verlaufenden Abschnitt erfolgt. Die beiden Haltescheiben können dann mittels Schweißnaht, Lötung, Umbördeln oder anderer geeigneter Fügetechniken mit den dazwischen liegenden Borsten zu einem Borstengehäuse verbunden werden, so daß eine kompakte ringförmige Bürstendichtung vorliegt, die so dann je nach Einsatzweise im Stator oder Rotor montiert werden kann.

In einer alternativen Lösung gemäß der Erfindung sind die Borsten radial außen in einem in Achsrichtung ausgerichteten ersten Abschnitt des Zwischenraumes und in einem radial ausgerichteten zweiten Abschnitt des Zwischenraums durch Klemmung festgelegt. Aufgrund der mehrfachen Klemmung mit Umlenkung der Borsen in axialer Richtung ergibt sich eine besonders kräftige, langwährende Festlegung der Borsten, ohne durch aufwendige Anbauten den Fertigungsaufwand nennenswert auszudehnen.

Um erhöhten Ansprüchen an die Haftung der Borsten im Gehäuse nachzukommen, können die Borsten zusätzlich im Bereich der Klemmung und, falls für die Funktion erforderlich, darüber hinaus miteinander vernäht oder verklebt sein. Hieraus resultiert auch eine vereinfachte Fertigung des Borstenpakets, da nicht einzelne Borsten zu handhaben sind, sondern ein zusammenhaltend gefügtes Borstenpaket. Ist das Vernähen oder Verkleben der Borsten nur für die Handhabung erforderlich, so kann diese Verbindung nach erfolgter Festlegung im Borstengehäuse wieder entfernt werden.

Das Nähen oder Weben von Fadenpackungen hat den Vorteil, daß die Borstenpakete in rationeller Weise hergestellt werden können. Zudem ist durch den schrägen Verlauf der Nähte bzw. der Schußfäden gegenüber den Borstenfäden schon in einem frühen Fertigungsstadium die gewünschte Anstellung der Borsten gegenüber der Rotorradialen ohne zusätzliche Fertigungsschritte möglich. Bürstendichtungen mit derart in Umfangsrichtung geneigten Borstenfäden werden für die Abdichtung von mit hoher Drehzahl rotierenden Rotor-Stator-Anordnungen benötigt. Nach dem Abtrennen der Borstenbahnen parallel zu den Schußfäden bzw. zu den Nähten kann die Einfassung der Borstenbahnen in das Borstengehäuse derart erfolgen, daß die Schußfäden bzw. Nähte sich innerhalb des Gehäuseumschlusses befinden, so daß zusätzlich zur Klemmung der Borsten im Gehäuse diese durch die Schußfäden bzw. Nähte eine zusätzliche Sicherung gegen Herauslösen erfahren.

Weitere bevorzugte Ausgestaltungen der Erfindung sind in den Unteransprüchen beschrieben.

Eine bevorzugte Ausführungsform der Erfindung wird nachfolgend unter Bezugnahme auf die beigefügte Zeichnung erläutert. Es zeigt:
- Fig. 1: einen Längsschnitt einer Rotor-Stator-Anordnung mit einer Bürstendichtung,
- Fig. 2: eine Prinzipdarstellung endseitig vernähter Borsten,
- Fig. 3: eine Ansicht einer mehrlagigen Fadenpackung,
- Fig. 4: eine Ansicht einer Borstenbahn und
- Fig. 5: eine ausschnittsweise Ansicht einer ringförmigen Bürstendichtung.

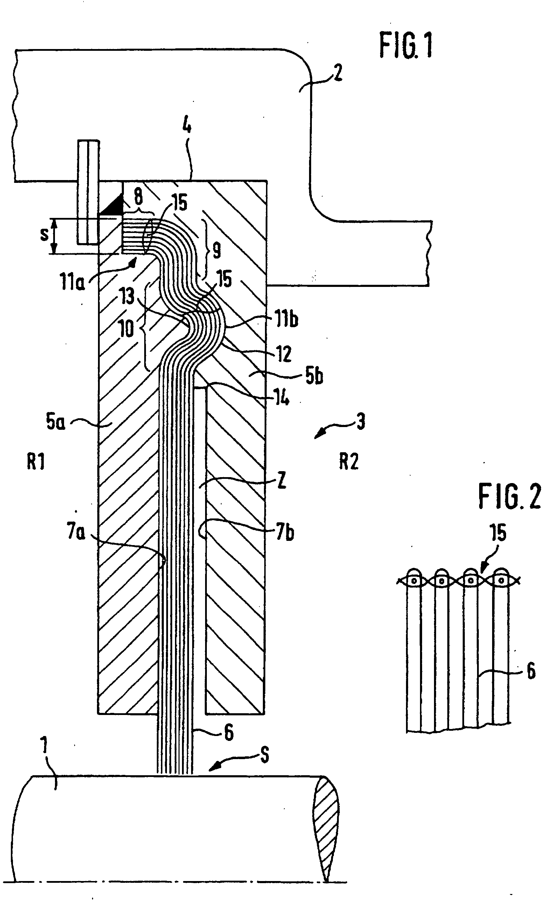

Der in Fig. 1 gezeigte Ausschnitt einer Rotor-Stator-Anordnung 1,2 ist Bestandteil eines nicht weiter dargestellten Gasturbinentriebwerkes. Zur Abdichtung zweier fluidisch unterschiedlich durckbeaufschlagter Räume R1 und R2 ist in dem Ringraum R1,R2 eine achskonzentrische, ringförmige Bürstendichtung 3 zwischen Rotor 1 und Stator 2 angeordnet. Die Bürstendichtung 3 besteht im wesentlichen aus einem Borstengehäuse 4 mit zwei koaxial zueinander angeordneten Haltescheiben 5a, 5b und einem Borstenbündel 6, das zwischen den beiden Haltescheiben 5a, 5b derart festgelegt ist, daß die Borsten 6 mit ihren freien Enden radial gegen die Umfangsfläche der Rotorwelle 1 ausgerichtet sind und somit den Spalt S zwischen Rotor 1 und Stator 2 abdichten. Als Beispiel wurde die Ausführung mit zweifacher Klemmung gewählt, die im wesentlichen für die einfachere Ausführung mit nur einer Klemmung - im radialen oder axialen Abschnitt - repräsentativ ist.

Zur Aufnahme der mit ihren freien Enden im wesentlichen radial und ggfs. mit einer Umfangsneigung ausgerichteten Borsten 6 weist das Borstengehäuse 4 einen achskonzentrischen, scheibenförmigen Zwischenraum Z auf, der durch eine entsprechende Profilierung der einander zugewandten Stirnseiten 7a,7b der Haltescheiben 5a,5b gebildet wird. In einem radial äußeren Bereich des Borstengehäuses 4 läuft der Zwischenraum Z in einem axial ausgerichteten, konzentrischen ersten Abschnitt 8 aus. Dieser geht nach einem kreisbogenförmigen Übergang 9 in einen zweiten konzentrischen Abschnitt 10 des Zwischenraums Z nach radial innen über. Der erste Abschnitt 8 ist in seiner Spaltweite s dabei derart dimensioniert, daß die Enden der Borsten 6 geklemmt werden, so daß ein Herausrutschen einzelner Borsten 6 aus dem Borstengehäuse 4 einerseits durch die Klemmung und andererseits durch den Formschluß, welcher durch die Umlenkung in axialer Richtung bewirkt wird, vermieden wird.

Der im wesentlichen radial ausgerichtete zweite Abschnitt 10 weist eine zusätzliche Klemmstelle 11b auf, die in Form einer umlaufenden Sicke ausgeführt ist. Entsprechend ist in der ersten Haltescheibe 5a eine ringförmige Vertiefüng 12 ausgebildet und in der gegenüberliegenden Haltescheibe 5b eine korrespondierende Auswölbung 13 ausgeführt, so daß die Borsten 6 im zweiten Abschnitt 10 im Längsschnitt etwa Ω-förmig ausgewölbt verlaufen. Dies führt zu einer weiter verbesserten Haftung der Borsten 6 im Borstengehäuse 4.

Im weiteren nach radial innen führenden Verlauf der Borsten 6 werden diese von der Stirnseite 7a bis zum Dichtspalt S geführt, während die gegenüberliegende Stirnseite 7b durch einen Absatz 14 am radial inneren Ende des zweiten Abschnittes 10 von den Borsten 6 beabstandet ist. Der Absatz 14 beendet somit an einer definierten Stelle den Bereich, in welchem die Borsten 6 im Borstengehäuse 4 geklemmt sind. Somit ist weiter radial innen ein elastisches Auslenken der Borsten 6 in Umfangsrichtung und - in eingeschränktem Maße - auch in axialer Richtung möglich, so daß ein exzentrischer Lauf des Rotors 1 ausgeglichen werden kann.

Um die Montage der Bürstendichtung 3 zu vereinfachen, sind die Borsten 6 im Bereich des ersten Abschnittes 8 mittels einer Fixiernaht 15 zusammengefaßt, so daß die Borsten 6 beim Einlegen in eine der beiden Haltescheiben 5a oder 5b besser handhabbar sind. Um dem Borstenbündel 6 eine zusätzliche Haftfähigkeit im Gehäuse 4 zu verleihen, ist die Fixiernaht 15 mehrfach mit Kett- und Schußfäden - wie Fig. 2 entnehmbar - ausgeführt. Eine weitere Fixiernaht 15 ist im Bereich des zweiten Abschnittes 10 ausgeführt.

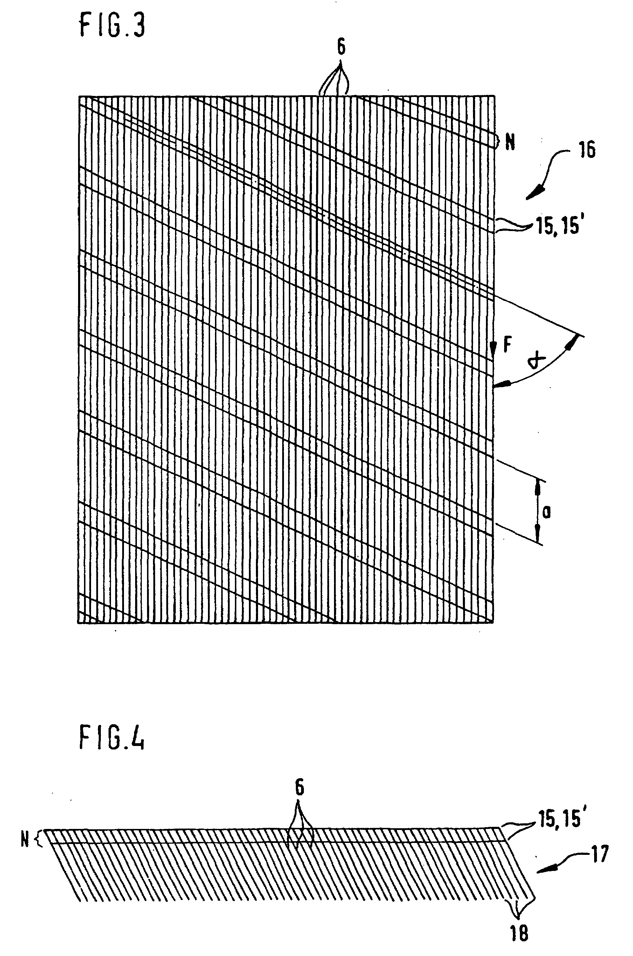

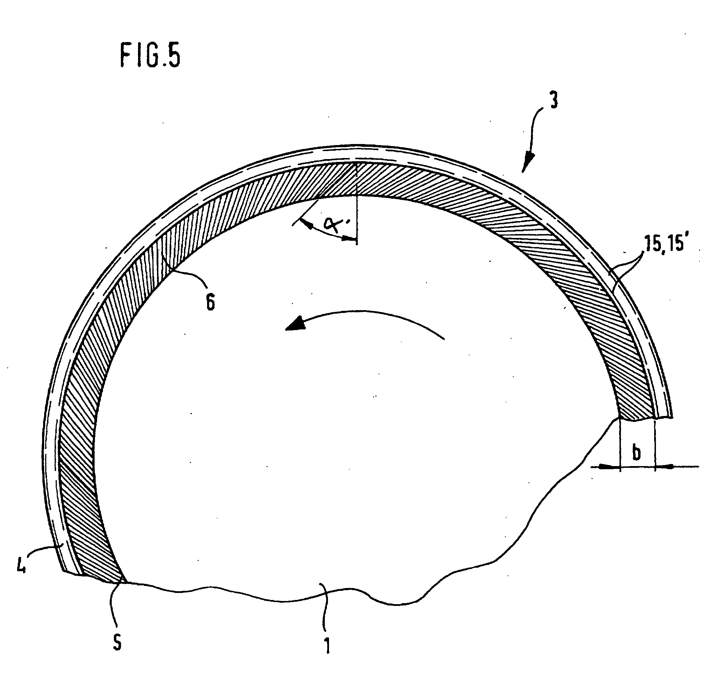

Bei der in Fig. 3 gezeigten Fadenpackung 16 handelt es sich um ein Vorprodukt zur Herstellung einer Bürstendichtung 3 wie sie in Fig. 5 zu erkennen ist und zur Abdichtung zweier Stufen einer Rotor-Stator-Anordnung eines nicht weiter dargestellten Gasturbinentriebwerks dient. Die in Fig. 3 dargestellte Fadenpackung 16 setzt sich aus mehreren in Breite und Tiefe parallel zueinander verlaufenden Borstenfäden 6 sowie aus quer zu den Borstenfäden 6 verlaufenden Nähten 15 bzw. Schußfäden 15' kreuzen die Borstenfäden unter einem Winkel α von etwa 65° , wobei dieser Winkel dem in Umfangsrichtung sich ergebenden Schrägstellungswinkel α' der Borstenfäden 6 gegenüber einer Rotorradialen R entspricht. Die schräg verlaufenden Nähte 15 bzw. Schußfäden 15' sind in der rechteckigen Fadenpackung 16 von Rand zu Rand durchlaufend ausgeführt. Die Nähte 15 bzw. Schußfäden 15' sind hier zweifach jeweils in einer Nahtzone N ausgeführt, wobei die Nahtzonen N regelmäßig wiederkehrend mit dem Versatz a voneinander beabstandet sind. Der zwischen den Nahtzonen N liegende schuß- bzw. nahtfreie Abschnitt der Fadenpackung 16 entspricht somit unter Berücksichtigung der trigonometrischen Winkelverhältnisse (Cosinus des Winkels α) der freien Borstenlänge b, wie sie der Fig. 5 zu entnehmen ist.

Bei der weiteren Verarbeitung der abgelegten bzw. gewebten Fadenpackung 16 werden einzelne Borstenbahnen 17 derart aus der Fadenpackung 16 herausgeschnitten, daß ein Ende die Nahtzone N und das gegenüberliegende Ende von den freien Borstenenden 18 gebildet wird. Der Schnitt zum Abtrennen der Borstenbahnen 17 wird also parallel zu den Nähten 15 bzw. Schußfäden 15' in deren unmittelbarer Nähe geführt. Die einzelnen Borstenbahnen 17 werden sodann in ein Borstengehäuse 4 eingefaßt, so daß die Nähte 15 bzw. Schußfäden 15' innerhalb des Borstengehäuses 4 zum Liegen kommen und die freien Borstenenden 18 zum Rotor 1 hin ausgerichtet sind und aus dem Gehäuse 4 herausragen. Sind für einen festen Sitz der Borstenfäden 6 im Borstengehäuse 4 die Schußfäden 15' bzw. Nähte 15 nicht erforderlich, so können diese aus dem Gehäuse 4 entfernt werden.

Für die Fertigung der mehrlagigen Fadenpackung 16 bieten sich zwei alternative Herstellungsverfahren an. Bei der ersten Verfahrensweise wird die flächig und mehrlagig vorliegende Fadenpackung 16 mit mehreren parallel zueinander versetzten Nähten 15 in bekannter Weise abgenäht, wobei hier der Nahtwinkel α einzuhalten ist. Vorzugsweise besteht dabei das Fadenmaterial aus dem gleichen Werkstoff wie die Borstenfäden.

Als Alternative hierzu wird ein Verfahren angeboten, bei dem die Fadenpackung 16 im Webverfahren erstellt wird, wobei die Kettfäden die Borsten 6 bilden und die parallel zueinander versetzten Schußfäden 15' die Borsten 6 im Winkel α von etwa 65° kreuzen. Nach dem Einziehen einer Anzahl von Schußfäden 15' bleibt die Kette entsprechend dem Versatz schußlos, so daß in diesem schußfreien Abschnitt die freie Borstenlänge b gebildet wird, in welchem die Borstenfäden 6 ohne Verbindung miteinander aus dem Borstengehäuse herausstehen und sich unbehindert ausbiegen können.

## Patentansprüche

1. Bürstendichtung zur Abdichtung eines Spaltes (S) zwischen einem Rotor (1) und einem Stator (2), mit einem am Stator (2) festgelegten Borstengehäuse (4), das zwei Haltescheiben (5a,5b) aufweist und in einem zwischen den Scheiben (5a,5b) ausgebildeten Zwischenraum (Z) die Borsten (6) mit zumindest vorwiegend radialer Ausrichtung zum Rotor (1) aufnimmt, **dadurch gekennzeichnet, dass** die Borsten (6) an ihrem rotorfernen Ende in einem in Achsrichtung (A) ausgerichteten Abschnitt (8) des Zwischenraumes (Z) und/oder in einem radial ausgerichteten Abschnitt (10) des Zwischenraums (Z) durch Klemmung ohne Verwendung zusätzlicher Klemmitel festgelegt sind, wobei die Borsten mindestens eine Umlenkung in radialer oder axialer Richtung erfahren.

2. Bürstendichtung nach Anspruch 1, **dadurch gekennzeichnet, daß** der Übergang (9) zwischen dem in Achsrichtung (A) ausgerichteten ersten Abschnitt (8) und dem radial ausgerichteten zweiten Abschnitt (10) des Zwischenraums (Z) bogenförmig ausgebildet ist.

3. Bürstendichtung nach Anspruch 2, **dadurch gekennzeichnet, dass** der Übergang (9) zwischen dem in Achsrichtung (A) ausgerichteten ersten Abschnitt (8) und dem radial ausgerichteten zweiten Abschnitt (10) des Zwischenraums derart ausgeführt ist, dass sich zur Klemmung der Borsten (6) im ersten Abschnitt (8) eine erste Klemmstelle (11a) ergibt.

4. Bürstendichtung nach einem der Ansprüche 1 bis 3, **dadurch gekennzeichnet, dass** eine im radial ausgerichteten Abschnitt (10) ausgeführte Klemmstelle (11b) als Sicke mit einer ringförmigen Vertiefung (12) in der ersten Haltescheibe (5a) und einer korrespondierenden Auswölbung (13) in der zweiten Haltescheibe (5b) ausgebildet ist, in welcher die Borsten (6) ausgewölbt verlaufen.

5. Bürstendichtung nach einem der vorhergehenden Ansprüche, **dadurch gekennzeichnet, dass** zur freien Beweglichkeit der Borsten (6) seitens des Spalts (S) der Zwischenraum (Z) im Anschluss an die radial innere Klemmstelle (11b) aufgeweitet ist.

6. Bürstendichtung nach einem der vorhergehenden Ansprüche, **dadurch gekennzeichnet, dass** die Borsten (6) im Bereich des ersten und/oder zweiten Abschnittes (8 bzw. 10) mittels wenigstens einer Fixiernaht (15) miteinander vernäht sind.

7. Bürstendichtung nach einem der vorhergehenden Ansprüche, **dadurch gekennzeichnet, dass** die Borsten (6) in einem Schrägstellungswinkel (α') gegenüber einer Rotorradialen angestellt sind.

8. Bürstendichtung nach Anspruch 6 und 7, **dadurch gekennzeichnet, dass** die Fixiemaht (15) unter einem Nahtwinkel (α) zur Fadenlaufrichtung (F) der Borsten (6) von ungleich 90° verläuft, wobei der Nahtwinkel (α) im wesentlichen dem Schrägstellungswinkel (α') der Borsten (6) entspricht.

9. Bürstendichtung nach einem der vorhergehenden Ansprüche 1 bis 5, **dadurch gekennzeichnet, dass** die Borsten (6) im Bereich des ersten und/oder zweiten Abschnitts (8 bzw. 10) miteinander verklebt sind.

## Claims

1. Brush-packing for packing a gap (G) between a rotor (1) and a stator (2) with a brush-housing (4) that has two holding plates (5a, 5b) and takes up the brushes (6), that are at least mainly radially aligned in relation to the rotor (1), in an intermediate space (I) developed between the plates (5a, 5b), **characterized in that** the brushes (6) are attached, at their ends furthest from the rotor, in an axially aligned section (8) of the intermediate space (I) and/or in a radially aligned section (10) of the intermediate space (I), through clamping without the use of additional clamping means, whereby the brushes undergo at least deflection in a radial or axial direction.

2. Brush-packing in accordance with claim 2, **characterized in that** the transition (9) between the first section (8), aligned in the axial direction (A), and the radially aligned second section (10) of the intermediate space (I), is arc-shaped.

3. Brush-packing in accordance with claim 2, **characterized in that** the transition between the first section (8), aligned in the axial direction (A), and the radially aligned second section (10) of the intermediate space is implemented such that there is a first clamping point (11a) for clamping the brushes (6) in the first section (8).

4. Brush-packing in accordance with one of claims 1 to 3, **characterized in that** a radially aligned clamping point (11b) is developed as a stiffening corrugation with an annular recess (12) in the first holding plate (5a) and a corresponding arching is developed in the second holding plate (5b) in which the brushes (6) are arched.

5. Brush-packing in accordance with one of the preceding claims, **characterized in that** the intermediate space (I) is extended, immediately after the radial, inner clamping point (11b), for free movement of the of the brushes (6) on the side of the gap (G).

6. Brush-packing in accordance with one of the preceding claims, **characterized in that** the brushes (6) are stitched together by means of a fixing seam, in the area of the first and/or second section (8 and 10).

7. Brush-packing in accordance with one of the preceding claims, **characterized in that** the brushes (6) are set at an inclined angle (α') in relation to radial lines of the rotor.

8. Brush packing in accordance with claim 6 and 7, **characterized in that** the fixing seam (15) runs at an angle (α) of a varying 90°, in relation to the thread line (T) of the brushes (6).

9. Brush-packing in accordance with one of the preceding claims 1 to 5, **characterized in that** the brushes (6) are stuck to each other in the area of the first and/or second section (8 and 10).

## Revendications

1. Joint de brosse pour rendre étanche une fente (S) entre un rotor (1) et un stator (2), avec un boîtier pour les poils (4) fixé sur le stator (2), qui présente deux disques de maintien (5a, 5b) et qui reçoit dans un espace intermédiaire (Z) formé entre les disques (5a, 5b) les poils (6) avec au moins une orientation principalement radiale par rapport au rotor (1), **caractérisé en ce que** les poils (6) a leurs extrémités éloignées du rotor sont fixés par serrage, sans utiliser de moyen de serrage supplémentaire, dans une section (8) orientée en direction axiale (A) de l'espace intermédiaire (Z) et/ou dans une section (10) orientée radialement de l'espace intermédiaire (Z), moyennant quoi les poils sont soumis au moins à une déflexion dans la direction radiale ou axiale.

2. Joint de brosse selon la revendication 1, **caractérisé en ce que** la transition (9) entre la première section (8) orientée dans la direction de l'axe (A) et la seconde section (10) orientée radialement de l'espace intermédiaire (Z) est de forme arquée.

3. Joint de brosse selon la revendication 2, **caractérisé en ce que** la transition (9) entre la première section (8) orientée dans la direction de l'axe (A) et la seconde section (10) orientée radialement de l'espace intermédiaire sont réalisées de telle sorte qu'un premier point de serrage (11a) se forme dans la première section (8) pour le serrage des poils (6).

4. Joint de brosse selon l'une quelconque des revendications 1 à 3, **caractérisé en ce qu'**un point de serrage (11b) réalisé dans la section (10) orientée radialement a la forme d'une ondulation avec un renfoncement (12) en forme d'anneau dans le premier disque de maintien (5a) et avec un renflement (13) correspondant dans le second disque de maintien (5b) ondulation dans laquelle les poils (6) s'étirent en formant un arc.

5. Joint de brosse selon l'une quelconque des revendications précédentes, **caractérisé en ce que** pour permettre le libre mouvement des poils (6) du côté de la fente (S), l'espace intermédiaire (Z) est élargi à l'endroit de connexion avec le point de serrage (11b) interne radial.

6. Joint de brosse selon l'une quelconque des revendications précédentes, **caractérisé en ce que** les poils (6) sont cousus entre eux dans la zone de la première et/ou de la seconde sections (6 respectivement 10) au moyen d'au moins une couture de fixation (15).

7. Joint de brosse selon l'une quelconque des revendications précédentes, **caractérisé en ce que** les poils (6) sont alignas selon un angle d'inclinaison (α') par rapport à une ligne radiale du rotor.

8. Joint de brosse selon la revendication 6 et 7, **caractérisé en ce que** la couture de fixation (15) s'étire selon un angle de couture (α) inférieur à 90° par rapport au sens de chaîne (F) des poils (6), moyennant quoi l'angle de couture (α) correspond essentiellement à l'angle d'inclinaison (α') des poils (6).

9. Joint de brosse selon l'une quelconque des revendications 1 à 5, **caractérisé en ce que** les poils (6) dans la zone de la première et/ou seconde section (8 respectivement 10) sont collés les uns avec les autres.
